# EUROPEAN PATENT APPLICATION

(11) **EP 1 278 378 A1**
(43) Date of publication of application: **22.01.2003**
(21) Application number: 01915775.9
(22) Date of filing: 26.03.2001
(51) Int. Cl.: H04N 5/92, G11B 20/10

(54) **RECORDING APPARATUS, SPECIAL PLAYBACK SYSTEM, MEDIUM AND INFORMATION OBJECT**

(30) Priority: 28.03.2000 JP 2000089691
(71) Applicant: MATSUSHITA ELECTRIC INDUSTRIAL CO., LTD., Kadoma-shi, Osaka 571-8501 (JP)
(72) Inventor: KUNO, Yoshiki, Moriguchi-shi, Osaka 570-0054 (JP); KOUDO, Toshikazu, Nishinomiya-shi, Hyogo 663-8102 (JP); YAGUCHI, Yoshitaka, Takatsuki-shi, Osaka 569-0061 (JP); KUBO, Noriaki, Takatsuki-shi Osaka 569-1122 (JP); YAMAUCHI, Kenichoro, Nagaokakyo-shi, Kyoto 617-0845 (JP); TANAKA, Ryuichiro, Kyoto 612-8485 (JP)
(74) Representative: Grünecker, Kinkeldey, Stockmair & Schwanhäusser Anwaltssozietät
(86) International application number: JP0102405
(87) International publication number: WO01074069

(57) **Abstract**

When performing special playback while recording AV data at the same time, there are cases where the necessary frame rate cannot be secured. The invention discloses a recording apparatus equipped with a recording and playback means 7, 8, 9 capable of performing simultaneous recording and playback, allowing recorded image data to be played back in special playback mode while simultaneously recording incoming image data, wherein the incoming image data is at least two or more kinds of data having different transfer rates, and when the recording and playback means 7, 8, 9 performs simultaneous recording and playback, the frame rate of the image data to be played back in special playback mode is changed according to the mode of the two or more kinds of incoming image data.

## Description

### TECHNICAL FIELD

The present invention relates to a recording apparatus capable of performing simultaneous recording and playback, allowing recorded image data to be played back in special playback mode as well as in normal playback mode, while recording incoming image data at the same time, a special playback system for performing special playback, and a medium and an information set for use with the same.

### BACKGROUND ART

It is known to provide a recording apparatus capable of performing recording and playback simultaneously, allowing recorded image data to be played back in special playback mode as well as in normal playback mode, while recording image data at the same time.

Such a recording apparatus of the prior art will be described by taking as an example an HDD unit which records AV data on a magnetic disk.

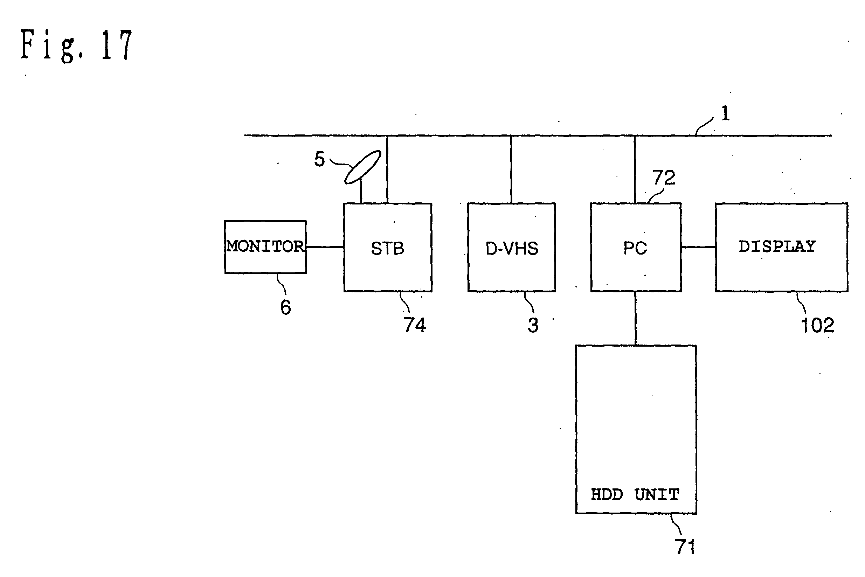

Figure 17 shows the configuration of a system that uses the prior art HDD unit 71.

An IEEE 1394 bus 1 is a high performance serial bus defined in the IEEE 1394-1995 Standard, over which AV data and commands are transferred.

A PC 72, a D-VHS 3, and STB 74 are connected to the IEEE 1394 bus 1. And the HDD unit 71 and a display 102 are connected to the PC 72.

The HDD unit 71 is a hard disk unit which includes a magnetic disk medium, and which writes and reads data on the magnetic disk medium.

The PC 72 is a personal computer that processes AV data and bitmaps the AV data so that it can be displayed on the display 102 of the PC 72.

The D-VHS 3 is a recording apparatus for recording and playback AV data on a tape medium.

The STB 74 is a set top box (satellite broadcast receiver) which receives broadcast waves from broadcast stations, and which displays the received AV data on a monitor 6, transfers the received AV data onto the IEEE 1394 bus 1, or displays AV data received from the IEEE 1394 bus 1 on the monitor 6.

Next, the operation of the above prior art system will be described.

A description will be given of the case of recoding AV data the STB 74 received on the HDD unit 71, playing back the AV data recorded on the HDD unit 71 in special playback mode, and displaying on the display 102 at the same time.

It is assumed here that the AV data is transmitted from a broadcast station in the form of an MPEG2 transport stream.

The STB 74 receives a broadcast program at an antenna 5, and demodulates. And the demodulated AV data is transmitted as isochronous packets onto the IEEE 1394 bus 1.

Identifying the isochronous channel number, the PC 72 receives the isochronous packets transferred from the STB 74. After the MEPG2 transport stream is reconstructed from the received isochronous packets and the format is changed to record, an LBA (Logical block adress) that records to each size of the fixed block is specified and transferred to the HDD unit 71. And then a write command is issued to the HDD unit 71.

Upon receiving the write command from the PC 72, the HDD unit 71 sequentially writes the AV data transferred from the PC 72, to the areas indicated by the corresponding physical addresses of the magnetic disk medium starting from the LBA specified for each fixed size block.

While the AV data transferred from the STB 74 is being recorded on the HDD unit 71, as described above, AV data recorded on the magnetic disk medium is played back by the HDD unit 71 for special playback.

More specifically, the PC 72 issues a read command to the HDD unit 71 by specifying the LBA from which to read the data.

The HDD unit 71 reads the AV data of fixed size block from the corresponding area of the magnetic disk medium starting from the specified LBA.

The PC 72 receives the AV data read by the HDD unit 71, and extracts I frames to be used for special playback. Then, an MPEG2 transport stream for special playback is constructed from the extracted I frames. Furthermore, the special playback MPEG2 transport stream is decoded, bitmapped and displayed on the display 102.

In this way, it is possible to record AV data and play back the AV data on recoding in special playback mode at the same time.

The operation of the PC 72 and the HDD unit 71 for performing special playback of AV data recorded on the magnetic disk medium while simultaneously recording AV data, as described above, will be explained below in further detail.

First, an explanation will be given of how the PC 72 and the HDD unit 71 play back previously recorded AV data from the magnetic disk medium in normal mode while simultaneously recording AV data.

When the PC 72 records or plays back AV data on the HDD unit 71, the PC 72 transfers each GOP (Group of picture) of AV data to the HDD unit 71.

That is, when recording AV data, the PC 72 stores the AV data transferred from an external device at a rate of 30 frames per second sequentially in a buffer provided in the main memory of the PC 72.

When one entire GOP is stored in the buffer, the GOP is transferred to the HDD unit 71, and a record command is issued to the HDD unit 71.

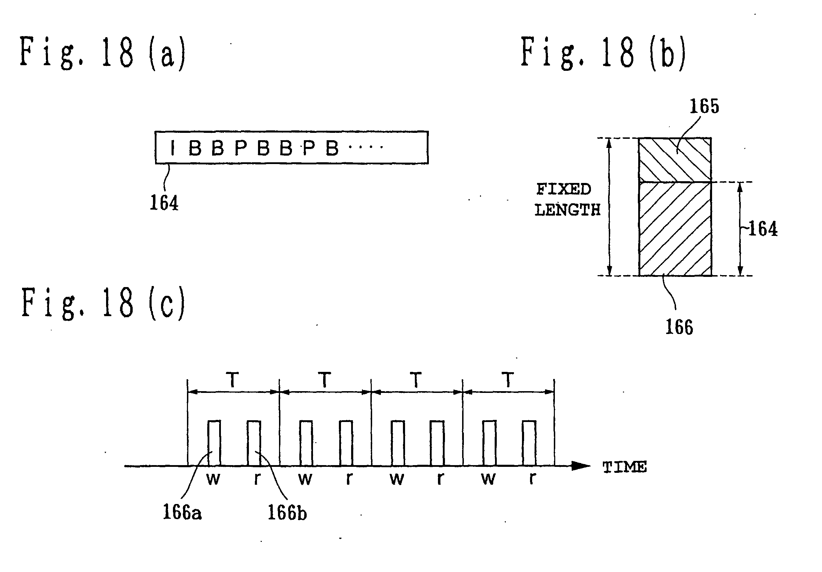

Figure 18(a) shows a 1GOP 164 as an example of the GOP. The GOP is an AV data edit unit, and must contain at least one I frame. In the example of Figure 18(a), it is shown that the 1GOP 164 consists of I, B, B, P, B ... frames arranged in this order. One GOP comprises AV data of about 0.5 second. That is, when AV data is displayed at a rate of 30 frames per second, one GOP is made up of 15 frames. The GOP size is about 512K bytes to 1M bytes in the case of standard definition television images. The size is about 1.5M bytes to 2M bytes in the case of high definition television images.

Since the GOP size is variable, when the PC 72 transfers AV data of the 1GOP 164 to the HDD unit 71, dummy data 165 is inserted in the 1GOP 164 as shown in the fixed size block 166 in Figure 18(b), to make it fixed length data. The PC 72 transfers the fixed size block 166, the above-described data, to the HDD unit 71.

When the AV data is standard definition image data, the size of the fixed size block 166 is set, for example, to 1M bytes. When the AV data is high definition image data, the size of the fixed size block 166 is set, for example, to 2M bytes.

When the record command is received from the PC 72, the HDD unit 71 records the data of the fixed size block 166 on the magnetic disk medium.

On the other hand, when playing back AV data in normal playback mode, the PC 72 issues a read command to the HDD unit 71.

When the read command is received from the PC 72, the HDD unit 71 reads from the magnetic disk medium the fixed size block 166 recorded as fixed length data as shown in Figure 18(b).

The PC 72 receives the readout data from the HDD unit 71. And in the fixed size block 166, the dummy data 165 and 1GOP 164 are temporarily stored in the buffer. Then, only the AV data stored as the 1GOP 164 in the buffer is AV decoded at a rate of about 30 frames per second, bitmapped and displayed on the display 102 connected to the PC 60.

Figure 18(c) shows a time chart illustrating how AV data is recorded on the HDD unit 71 while normal playback being performed at the same time.

In the prior art system, the time is divided into periods of duration T (T is a predetermined number) . For example, the value of T is 0.5 second. Then, the PC 72 performs control so that the HDD unit 71 performs one record operation and one playback operation during any one period T. That is, as shown in Figure 18(c), the PC 72 performs control so that a fixed size block 166a is recorded and a fixed size block 166b read out during each period T.

In the meantime, the PC 72 sequentially decodes the AV data stored in the buffer and bitmaps the data for output to the display 102.

In this way, recording a fixed size block 166a on the HDD unit 71 once for certain and reading a fixed size block 166b from the HDD unit 71 once for certain during the period T, both the PC 72 and the HDD unit 71 guarantee to record and playback AV data uninterruptedly and continuously.

In the same manner as described above, when playing back the AV data previously recorded on the magnetic disk medium in special playback mode while simultaneously recording AV data, it is guaranteed to record and playback of AV data in special playback mode uninterruptedly and continuously as follows.

That is, the AV data is recoded on the HDD unit 71 by the fixed size block 166 once for certain every period T, and at the same time a predetermined number of I frames to be used for special playback are always extracted.

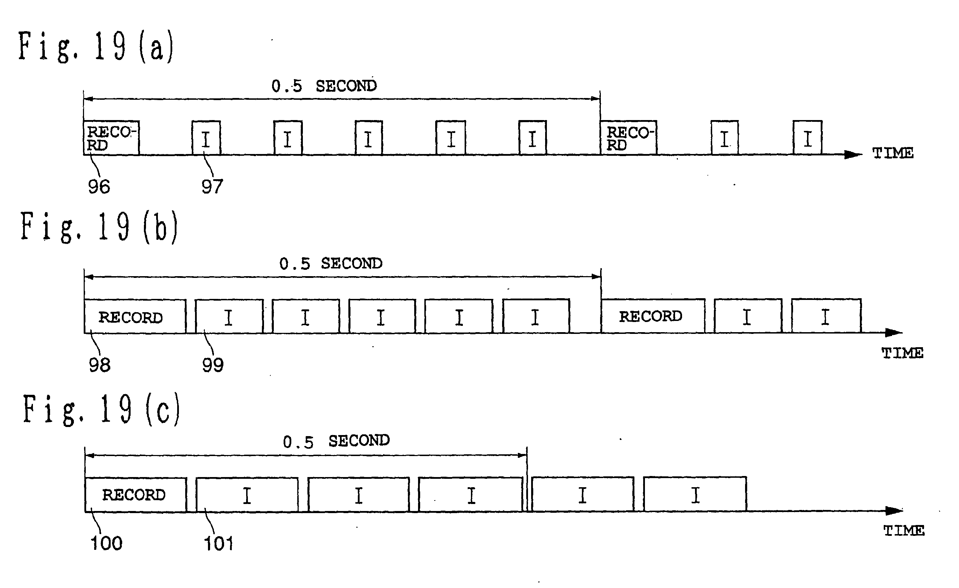

Figure 19 shows time charts in the case when the PC 72 reads AV data for special playback and extracts the I frames to be used for special playback, while performing control so that AV data to be recorded is recorded on the HDD unit 71 on a fixed size block basis.

Figure 19(a) is a time chart in the case when the AV data to be recorded is standard definition television image data, and the AV data for special playback is also standard definition television image data. On the other hand, Figure 19(b) is a time chart in the case when the AV data to be recorded is high definition television image data, and the AV data for special playback is also high definition television image data.

In Figure 19(a), record 96 indicates the time during which AV data of one fixed size block is recorded, and I 97 indicates the time required to extract one I frame. It is also shown that AV data of one fixed size block is recorded on the HDD unit 71 once in every 0.5 seconds. That is, the PC 72 performs control so that AV data of one fixed length block is recorded on the HDD unit 72 once in every 0.5 seconds. The period T described above is therefore 0.5 second. It is also shown that within the period of 0.5 second, the PC 72 extracts five I frames to be used for special playback. That is, 10 I frames to be used for special playback are extracted in one second.

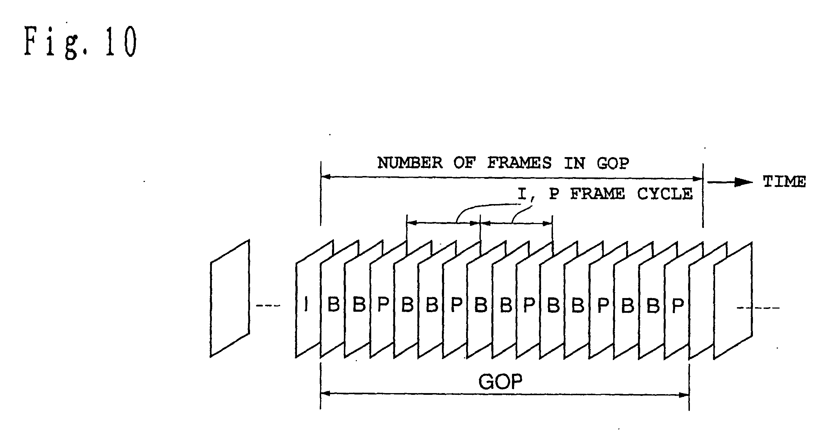

In Figure 19 (b), record 98 indicates the time during which AV data of one fixed size block is recorded, and I 99 indicates the time required to extract one I frame. It is also shown that AV data of one fixed size block is recorded on the HDD unit 71 once in every 0.5 seconds. That is, as in the case of Figure 19(a), the PC 72 performs control so that AV data of one fixed size block is recorded on the HDD unit 72 once in every 0.5 seconds. The period T described above is therefore 0.5 second. It is also shown that within the period of 0.5 second, the PC 72 extracts five I frames to be used for special playback, as in the case of Figure 19(a). That is, as in the case of Figure 19(a), 10 I frames to be used for special playback are extracted in one second.

In this way, the PC 72 always extracts within one second a predetermined number of I frames to be used for special playback, regardless of whether the AV data to be recorded is high definition television image data or standard definition television image data, or whether the AV data for special playback is high definition television image data or standard definition television image data.

That is, when per forming special playback of previously recorded AV data while simultaneously recording AV data, the PC 72 and the HDD 71 in the prior art system extract within one second a predetermined number of I frames to be used for special playback, regardless of the kind of AV data to be recorded or the kind of AV data to be used for playback mode.

However, when provisions are made to always extract a predetermined number of I frames per second for special playback, a situation such as shown in Figure 19(c) can occur.

Figure 19 (c) shows another time chart in the case when playing back high definition television images in special playback mode while simultaneously recording high definition television images. This time chart shows the case where, because of the limited processing capability of the HDD unit 71, only three I frames to be used for special playback can be extracted during one 0.5-second period, resulting in an inability to process AV data of one fixed length block for recording in time for the next 0.5-second period.

High definition television image data is larger in size than standard definition television image data. Furthermore, I frame size is large compared with B frames or P frames. Therefore, the situation of being unable to process the data in time can occur, for example, when the size of the I frames to be used for special playback is larger than the size of average I frames. That is, even when the HDD unit 71 is able to play back previously recorded AV data in normal mode while simultaneously recording AV data, if it is attempted to play back previously recorded AV data in special playback mode while the HDD unit 71 is recording AV data, the predetermined number of I frames per second may not be able to be extracted for special playback because of the limited processing capability of the HDD unit 71. In other words, the frame rate at which to extract the I frames for special playback may not be able to be secured. This is because the data stream for special playback consists only of I frames, requiring a much higher data rate than the normal playback data stream.

That is, in the case of performing special playback while recording AV data at the same time in simultaneous recording and playback, the problem is that the necessary frame rate may not be able to be secured because of the limited transfer capability of the PC or a recording apparatus such as the HDD unit, resulting in an inability to accomplish recording of AV data or special playback of AV data properly.

Furthermore, when decoding the special playback data stream in the PC 72 for display on the display 102, or when outputting the special playback data stream to a terminal apparatus such as the STB, since the special playback data stream requires a higher transfer rate than the normal playback data stream, as noted above, there can occur a situation where the special playback data stream played back by the PC 72 or a playback apparatus such as the HDD unit 71 may exceed the upper limit of the transfer rate limited by the decode/display capability of the PC 72, or may exceed the limit of the input that a terminal apparatus such as the STB can accept. If this happens, the PC 72 or the terminal apparatus cannot display special playback images properly.

In particular, when the special playback data stream is constructed from I frames alone, since there is no MPEG data compression in the temporal domain, but the data is compressed only in the spatial domain, the processing time required to decompress one frame at the terminal apparatus side becomes longer compared with the case of normal playback. In other words, the number of frames that can be decompressed per unit time is smaller in the case of special playback than in the case of normal playback. As a result, when a playback apparatus such as the HDD unit 71 performs special playback, if the number of frames output per unit time is too large, the data amount will exceed the amount that the PC 72 or the terminal apparatus can decompress in unit time, resulting in an inability to display images properly.

That is, the problem is that the terminal apparatus that should perform special playback may not be able to properly display special playback images since the special playback data stream transferred from the HDD unit requires a higher transfer rate than the normal playback data stream, and the amount of data to be decompressed per unit time is large.

### DISCLOSURE OF THE INVENTION

In view of the above problems, it is an object of the present invention to provide a recording apparatus that, when performing simultaneous recording and playback, allowing recording of AV data to continue while performing special playback, can secure the necessary frame rate and can therefore accomplish recording of AV data and special playback of previously recorded AV data simultaneously and properly, and also provide a medium and an information set for use with the same.

In view of the above problems, it is another object of the invention to provide a special playback system in which even if a special playback data stream is transferred from a playback apparatus, the special playback data stream does not exceeds the processing limit of a terminal apparatus and the terminal apparatus displays special playback images properly, and also provide a medium and an information set for use with the same.

To solve the above problem, a 1st invention of the present invention (corresponding to Claim 1) is a recording apparatus equipped with a recording and playback means capable of performing simultaneous recording and playback, allowing recorded image data to be played back in special playback mode while simultaneously recording incoming image data, wherein
said incoming image data is at least two or more kinds of data having different transfer rates, and
when said recording and playback means performs said simultaneous recording and playback, the frame rate of said image data to be played back in special playback mode is changed according to the mode of said two or more kinds of incoming image data.

A 2nd invention of the present invention (corresponding to Claim 2) is a recording and playback apparatus as set forth in the 1st invention, wherein when performing said simultaneous recording and playback, said incoming image data has at least two or more kinds of transfer rates, and the frame rate of said image data to be played back in special playback mode is smaller when said incoming image data is one that has the higher of the transfer rates.

A 3rd invention of the present invention (corresponding to Claim 3) is a recording and playback apparatus as set forth in the 1st or 2nd invention, wherein when performing said simultaneous recording and playback, said image data to be played back in special playback mode has at least two or more kinds of transfer rates, and the frame rate is smaller when said image data to be played back in special playback mode is one that has the higher of the transfer rates.

A 4th invention of the present invention (corresponding to Claim 4) is a recording apparatus as set forth in any one of the 1st to 3rd inventions, wherein said frame rate is the number of frames to be read out in a prescribed time.

A5th invention of the present invention (corresponding to Claim 5) is a recording apparatus as set forth in any one of the 1st to 4th inventions, wherein
said recorded image data conforms to an MPEG format, and
said image data to be played back in special playback mode is constructed from all or part of frames constituting said recorded image data.

A 6th invention of the present invention (corresponding to Claim 6) is a recording apparatus as set forth in any one of the 1st to 5th inventions, wherein said incoming image data is high definition television image data or standard definition television image data.

A 7th invention of the present invention (Corresponding to Claim 7) is a special playback system comprising:
a playback apparatus capable of playing back data in special playback mode;
a transmission line for transmitting there along said played back data; and
a terminal apparatus for receiving data transmitted along said transmission line, and wherein:
   said terminal apparatus notifies said playback apparatus of an upper limit of the signal processing capability of said terminal apparatus, and
   said playback apparatus outputs special playback data so as not to exceed said processing capability.

An 8th invention of the present invention (corresponding to Claim 8) is a special playback system as set forth in the 7th invention, wherein
said special playback data conforms to an MPEG format, and
said special playback is performed by playing back all or part of frames constituting said special playback data.

A9th invention of the present invention (corresponding to Claim 9) is a medium holding thereon a program and/or data for causing a computer to implement all or part of the functions of all or part of the means of the recording apparatus described in any one of the 1st to 6th inventions, wherein said medium is to be processed by computers.

A 10th invention of the present invention is an information set consisting of a program and/or data for causing a computer to implement all or part of the functions of all or part of the means of the recording apparatus described in any one of the 1st to 6th inventions.

An 11th invention of the present invention (corresponding to Claim 11) is a medium holding thereon a program and/or data for causing a computer to implement all or part of the functions of all or part of the playback apparatus, the transmission line, and the terminal apparatus in the special playback system described in the 7th or 8th invention, wherein said medium is to be processed by computers.

A 12th invention of the present invention (corresponding to Claim 12) is an information set consisting of a program and/or data for causing a computer to implement all or part of the functions of all or part of the playback apparatus, the transmission line, and the terminal apparatus in the special playback system described in the 7th or 8th invention.

### BRIEF DESCRIPTION OF THE DRAWINGS

Figure 1 is a diagram showing the configuration of a system that includes an HDD unit according to a first embodiment of the present invention.
Figure 2 is a block diagram showing the configuration of the HDD unit in the first embodiment of the present invention.
Figure 3 is a diagram for explaining the recording format in the first embodiment of the present invention.
Figure 4 (a) is a time chart illustrating simultaneous recording and playback when recording high definition television image data and playing back normal definition television image data in special playback mode according to the first embodiment of the present invention, and Figure 4(b) is a time chart illustrating simultaneous recording and playback when recording normal definition television image data and playing back normal definition television image data in special playback mode according to the first embodiment of the present invention.
Figure 5 is a diagram for explaining the method of adjusting the frame rate of AV data for special playback according to the first embodiment of the present invention.
Figure 6 is a diagram for explaining how I frames are extracted when creating special playback data from the AV data to be played back in special playback mode according to the first embodiment of the present invention.
Figure 7 is a diagram showing the recording format of a disk access unit according to the first embodiment of the present invention.
Figure 8 is a diagram showing chain information in the first embodiment of the present invention.
Figure 9 is a diagram showing special playback information in the first embodiment of the present invention.
Figure 10 is a diagram for explaining a frame appearance pattern in the first embodiment of the present invention.
Figure 11 is a diagram showing another example of the special playback information in the first embodiment of the present invention.
Figure 12 is a diagram showing another example of the chain information in the first embodiment of the present invention.
Figure 13 is a diagram showing the configuration of a special playback system according to a second embodiment of the present invention.
Figure 14 is a diagram showing that the upper limit value of the transfer rate at which an STB in the second embodiment of the present invention can accept an input is multiplexed as a private packet on an MPEG2 transport stream.
Figure 15 is a diagram showing the configuration of a special playback system according to a third embodiment of the present invention.
Figure 16 is a diagram showing that a command for reporting the upper limit value of the transfer rate at which an STB in the third embodiment of the present invention can accept an input is transmitted as an asynchronous packet on an IEEE 1394 bus.
Figure 17 is a diagram showing the configuration of a system that includes a prior art HDD unit.
Figure 18 is a diagram for explaining a prior art simultaneous recording and playback method.
Figure 19(a) is a time chart illustrating simultaneous recording and playback when the prior art HDD unit records high definition television image data and plays back normal definition television image data in special playback mode, and Figure 19 (b) is a time chart illustrating simultaneous recording and playback when the prior art HDD unit records normal definition television image data and plays back normal definition television image data in special playback mode.

### DESCRIPTION OF THE REFERENCE NUMERALS

- 1.: IEEE 1394 BUS
- 2.: HDD UNIT
- 3.: D-VHS
- 4,: 4a, 4b. STB
- 5.: ANTENNA
- 6.: MONITOR
- 7.: IEEE 1394 I/F
- 8.: STREAM CONTROL MEANS
- 10.: HDD
- 11.: FRAME RATE ADJUSTING MEANS
- 12.: TRANSFER RATE NOTIFYING MEANS
- 13.: TRANSFER RATE NOTIFICATION PACKET GENERATING MEANS
- 14.: TUNER
- 16.: TRANSPORT DECODER
- 17.: IEEE 1394 I/F
- 18.: AV DECODER
- 20.: BUFFER RAM
- 21.: MICROPROCESSOR
- 22.: RECORDING SIGNAL PROCESSING MEANS
- 23.: PLAYBACK SIGNAL PROCESSING MEANS
- 24.: TRANSFER CONTROL MEANS
- 25.: RECORDING/PLAYBACK PORT
- 27.: DISK ACCESS UNIT
- 28.: HEADER
- 29.: TRANSPORT STREAM
- 30.: CHAIN INFORMATION
- 31.: SPECIAL PLAYBACK INFORMATION
- 64.: SPECIAL PLAYBACK DATA
- 65.: SPECIAL PLAYBACK SOURCE

### BEST MODE FOR CARRYING OUT THE INVENTION

Embodiments of the present invention will be described below with reference to drawings.

### (Embodiment 1)

This embodiment will be described by dealing with an HDD unit as the recording apparatus that, when performing simultaneous recording and playback, allowing recording of AV data to continue while performing special playback, can secure the necessary frame rate and can therefore accomplish recording of AV data and special playback of AV data simultaneously and properly.

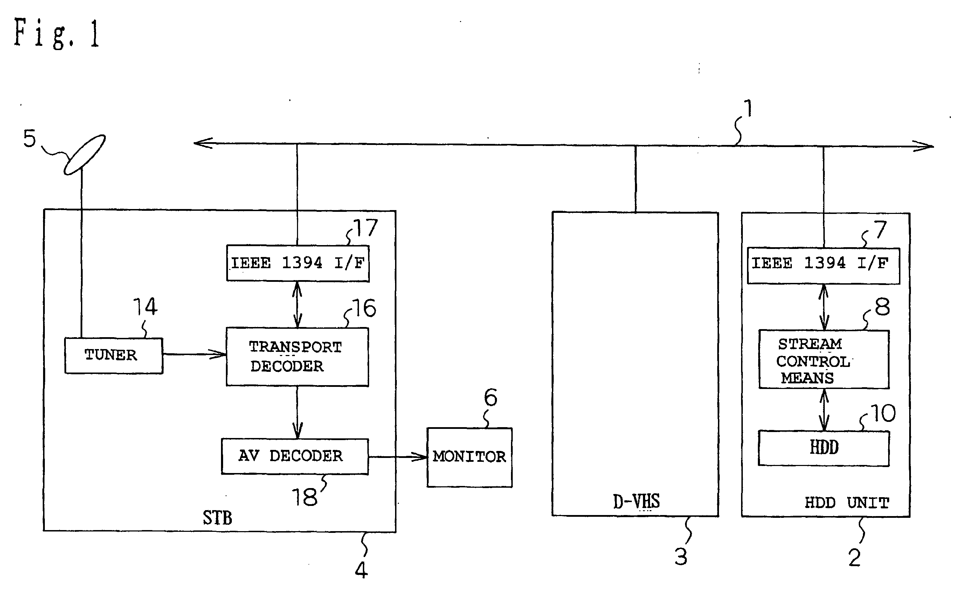

Figure 1 shows the configuration of a system that includes the HDD unit 2 as one embodiment of the recording apparatus of the present invention.

An IEEE 1394 bus 1 is a high performance serial bus defined in the IEEE 1394-1995 Standard, over which AV data and commands are transferred.

The HDD unit 2, a D-VHS 3, and an STB 4 are connected to the IEEE 1394 bus 1.

The HDD unit 2 is a hard disk unit which is equipped with an IEEE 1394 bus as a connection interface, and which records AV data on a magnetic disk medium and plays back AV data recorded on the magnetic disk medium, and is different in configuration from the HDD unit 71 described in the prior art.

The D-VHS 3 is a recording apparatus which records AV data on a tape medium and plays back AV data recorded on the tape medium.

The STB 7 is a set top box (satellite broadcast receiver) which receives broadcast waves from broadcast stations, and which displays the received AV data on a monitor 6, transfers the received AV data onto the IEEE 1394 bus 1, or displays AV data received from the IEEE 1394 bus 1 on the monitor.

The monitor 6 is connected to the STB 4 to which is also connected an antenna 5.

The STB 4 comprises a tuner 14, a transport decoder 15, and an AV decoder 18.

The tuner 14 is a means of receiving broadcast waves from a broadcast station, and demodulating the received data.

The transport decoder 16 is a means of demultiplexing an MPEG2 transport stream. The AV decoder 18 is a means of decompressing the demultiplexed MPEG2 transport stream and converting it into an analog signal.

The IEEE 1394 I/F 17 is an interface for transferring commands and AV data to and from external devices via the IEEE 1394 bus 1.

The HDD unit 2 comprises an IEEE 1394 I/F 7, a stream control means 8, and an HDD 10.

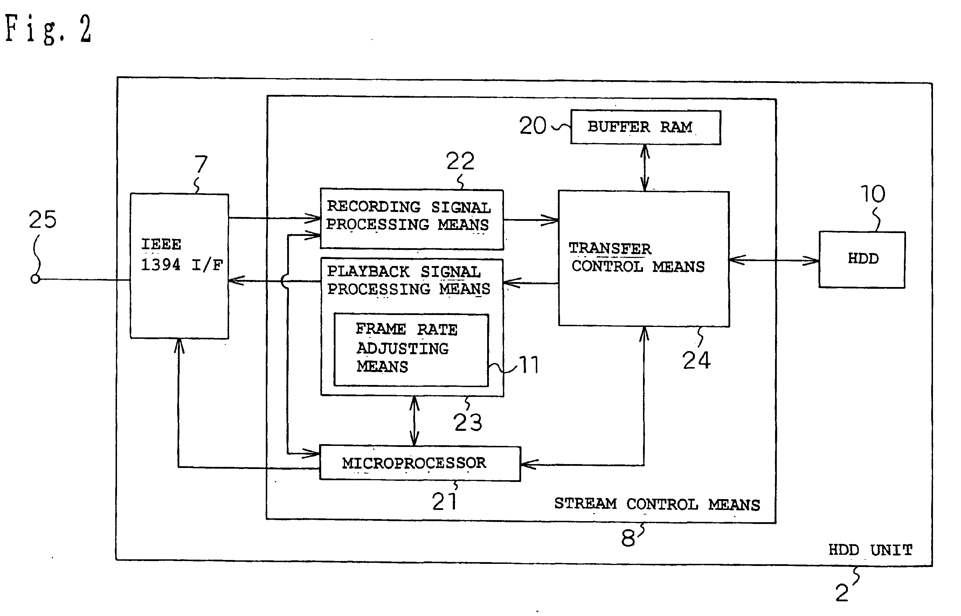

Figure 2 shows the detailed configuration of the HDD unit 2.

The IEEE 1394 I/F 7 is connected to the IEEE 1394 bus 1 via a recording/playback port 25.

The stream control means 8 comprises a recording signal processing means 22, a playback signal processing means 23, a transfer control means 24, a buffer RAM 20, and a microprocessor 21.

The playback signal processing means 23 includes a frame rate adjusting means 11.

In Figure 2, the HDD 10 is one that records data on or plays back from a magnetic disk medium by specifying an LBA, and is equivalent in function to the HDD unit 71 described in the prior art.

The IEEE 1394 I/F 7 is an interface for transferring commands and AV data to and from external devices via the IEEE 1394 bus 1.

The stream control means 8 is a means that accesses the magnetic disk medium of the HDD 10 by specifying an LBA, and has a capability to process two or more channels of AV data simultaneously.

The recording signal processing means 22, forming part of the stream control means 8, is a means that analyzes an incoming MPEG2 transport stream and creates special playback information which is referred to when performing special playback, and that appends a time stamp to each transport packet in the MPEG2 transport stream and transfers the packets to the transfer control means 24.

The playback signal processing means 23 is a means that separates the time stamp appended to each transport packet in the MPEG2 transport stream transferred from the transfer control means 24, transfers the transport packets at intervals of time indicated by the time stamp and, when performing special playback, creates special playback data by reorganizing the MPEG2 transport stream, transferred from the transfer control means 24, so as to match the MPEG2 grammar.

The transfer control means 24 is a means that arbitrates data transfers between the recording signal processing means 22, the playback signal processing means 23, and the HDD 10, temporarily stores the MPEG2 transport stream and special playback information received from the recording signal processing means 22 into the buffer RAM 20 when recording AV data and, when data is stored in the buffer RAM 20 up to the capacity defined by a disk access unit, issues a command to specify the LBA at which to write to the HDD 10 and the number of sectors of data to be transferred. The data access unit here refers to a fixed length recording/playback data format in the present embodiment, and the details of the format will be described later. When playing back AV data in normal playback mode, the transfer control means 24 also transfers the data, read from the HDD 10 on a disk access unit basis, to the buffer RAM 20 for temporarily storing therein and, when there is a request from the playback signal processing means 23, transfers the data stored in the buffer RAM 20 to the playback signal processing means 23. Further, when playing back AV data in special playback mode, the transfer control means 24 reads only necessary frames (for example, I frames) from the HDD 10 on a frame by frame basis, transfers the frames to the buffer RAM 20 and, when there is a request from the playback signal processing means 23, transfers the frames stored in the buffer RAM 20 to the playback signal processing means 23.

The frame rate adjusting means 11 is a means that controls the playback signal processing means 23 so that, when performing special playback, the frame interval for the stream to be output from the playback signal processing means 23 matches the frame rate (frame period) set by the microprocessor 21. At this time, the microprocessor 21 sets the optimum frame rate (frame period) in the frame rate adjusting means 11 so that, when performing simultaneous recording and playback, the number of I frames, to be sent out during the time that AV data of one disk access unit is input, varies in accordance with the kind of AV data to be recorded and the kind of AV data to be played back in special playback mode.

The buffer RAM 20 is a synchronous dynamic RAM for temporarily storing data.

The microprocessor 21 is a means that controls the processing operations of the IEEE 1393 I/F 7 and the stream control means 8, identifies the kind of AV data to be recorded and the kind of AV data to be played back in special playback mode, determines the frame rate (frame period) for the special playback AV data based on the result of the identification, and sets the frame rate in the frame adjusting means 11.

The HDD 10 is a means that positions a magnetic head not shown by associating the specified LBA with a head and a sector and controlling an actuator and a spindle motor not shown in the HDD 10, and records and reads data on the magnetic disk medium not shown by means of the magnetic head.

The sectors forming the magnetic disk medium can each record 512 bytes of data, and the stream control means 8 performs control so that the HDD 10 can write or read data on the magnetic disk medium, for example, contiguous 4096 sectors at a time. In the present embodiment, the area where the HDD 10 can read or write on the magnetic disk medium at a time as described above is called the disk access unit. The present embodiment assumes that the disk access unit is of fixed length.

The HDD unit 2 in this embodiment is an example of the recording apparatus of the present invention, and the stream control means 8 and the HDD 10 in this embodiment are an example of the recording and playback means of the present invention.

Operation of this embodiment will be described below.

A description will be given of the operation when the HDD unit 2, while recording AV data being played back from the D-VHS 3, plays back recorded data in special playback mode for display on the monitor 6 connected to the STB 4.

This embodiment deals with an example in which only I frames are extracted for special playback. It will, however, be recognized that in this embodiment, special playback can also be performed using other frames than I frames. The number of I frames to be sent out per second for special playback is varied according to the kind of AV image data being recorded while the special playback is being performed. Even when the kind of AV image data being recorded during the special playback is the same, if the kind of AV image data to be played back in special playback mode is different, the number of I frames to be sent out per second for special playback is also varied. That is, when the transfer rate of the AV data being recorded is high, the number of I frames to be sent out per second is reduced. The number of I frames to be sent out per second is also reduced when the size of the AV image data to be used for special playback is large.

The above can be stated another way. That is, the period during which the I frames to be used for special playback are sent out is varied according to the kind of AV image data being recorded during the special playback. Even when the kind of AV image data being recorded during the special playback is the same, if the kind of AV image data to be played back in special playback mode is different, the period during which I frames are sent out for special playback is also varied.

Hereinafter, the number of I frames to be sent out per second for special playback will be called the special playback frame rate. As opposed to that, the period during which I frames are sent out for special playback is called the special playback frame period. When so named, the special playback frame period is equal to the reciprocal of the special playback frame rate.

The number of frames to be sent out per second (frame transmission period) is adjusted by the frame rate adjusting means 11.

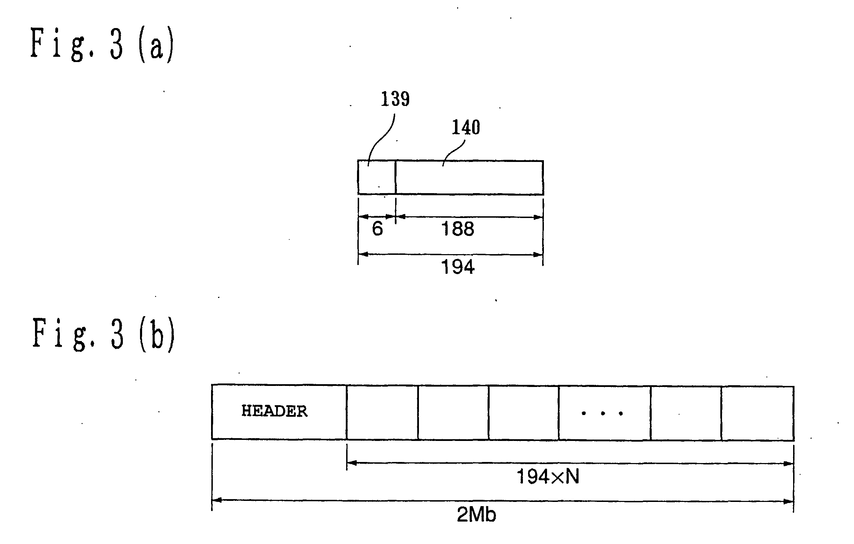

This will be explained with reference to Figures 3, 4, and 5. An additional explanation of this will be given later in the description of the simultaneous recording and playback operations of the HDD 2.

First, referring to Figure 3, the recording and playback method of the HDD 10 will be explained by dealing with the recording format of the disk access unit as the minimum unit of continuous recording or normal playback, the method of scheduling the recording and playback operations of the HDD 10, etc.

Figure 3 shows the format used when recording MPEG2 transport stream type AV data on the HDD 10.

The data is recorded on the HDD 10 in blocks of 194 bytes, each block consisting of a 188-byte transport packet 140 and a 6-byte time stamp 139 added to it, as shown in Figure 3 (a).

Figure 3 (b) shows data consisting of a total of (194 × N + header size) bytes, constructed by aggregating N 194-byte data blocks (N is a positive integer) and appending a header at the beginning. In the present embodiment, the header size is adjusted so that the total data size becomes equal to the size of the disk access unit, i.e., 2 M bytes. That is, the AV data stored in the buffer RAM 19 is transferred (194 × N + header size) bytes = 2M bytes at a time for reading or writing to the HDD 10, as shown in Figure 3(b).

The buffer RAM 20 includes a recording buffer and a playback buffer.

Transport packets are sequentially input from the IEEE 1394 I/F 7 to the recording signal processing means 22 in the stream control means 8 at a rate of about 2 M bytes in about 0.5 second.

The recording signal processing means 22 appends a time stamp to every incoming transport packet to construct a 194-byte data block, creates special playback information, and transfers the 194-byte data block and the special playback information to the transfer control means 24. The transfer control means 24 temporarily stores the data received from the recording signal processing means 22 into the recording buffer provided in the buffer RAM 20. The transfer control means 24 also creates header information of a disk access unit that stores the special playback information, etc., and stores the header information in the recording buffer. The details of header information of a disk access unit will be described later.

When data has been stored in the recording buffer up to the amount equal to one disk access unit, the data of one disk access unit stored in the recording buffer is transferred to the HDD 10 under the control of the transfer control means 24. If, at this time, the HDD 10 is in the process of data transfer, a record command is issued after the transfer operation of the HDD 10 is completed.

Data is also transferred sequentially from the playback buffer to the playback signal processing means 23. The playback signal processing means 23 transfers transport packets to the IEEE 1394 I/F 7 for output.

In the case of normal playback, the transfer control means 24 issues a read command to the HDD 10 at the timing that data of one disk access unit is output from the playback buffer for transfer to the playback signal processing means 23. If, at this time, the HDD 10 is in the process of data transfer, the read command is issued after the transfer operation of the HDD 10 is completed. In the case of special playback, at the timing that data of one frame is output from the playback buffer, a read command for the next frame data is issued to the HDD 10. If, at this time, the HDD 10 is in the process of data transfer, the read command is issued after the transfer operation of the HDD 10 is completed.

On the other hand, the HDD 10 executes the record command or read command received from the transfer control means 24.

When executing the read command, in the case of normal playback the HDD 10 reads out data of one disk access unit, and the transfer control means 24 temporarily stores the readout data in the playback buffer. In the case of special playback, on the other hand, data of one frame is read out and stored in the playback buffer.

When executing the record command, the HDD 10 records the data of one disk access unit, transferred from the recording buffer, on the magnetic disk medium.

Recording of AV data and reading of AV data are performed under the control of the transfer control means 24 by queuing the respective transfer requests to the HDD 10. With the queued requests, the transfer control means 24 issues the record or read commands to the HDD 10 in a prescribed order. On the other hand, the HDD 10 executes the record or read commands. For each command, the HDD 10 records or reads AV data of one disk access unit of the format shown in Figure 3(b), onto or from the magnetic disk medium. In the case of special playback, AV data of one frame is read from the magnetic disk medium.

In particular, when performing special playback while recording, data of n frames are output from the playback buffer for transfer to the playback signal processing means 23 while the HDD 10 is recording AV data of one disk access unit onto the magnetic disk medium. This means that a transfer request for reading data of n frames from the HDD 10 is issued. When the transfer of one disk access unit from the HDD 10 is completed, the read request for n frames is issued to the HDD 10 by the transfer control means 24. In the case of special playback, data of n or more frames are first cached in the playback buffer.

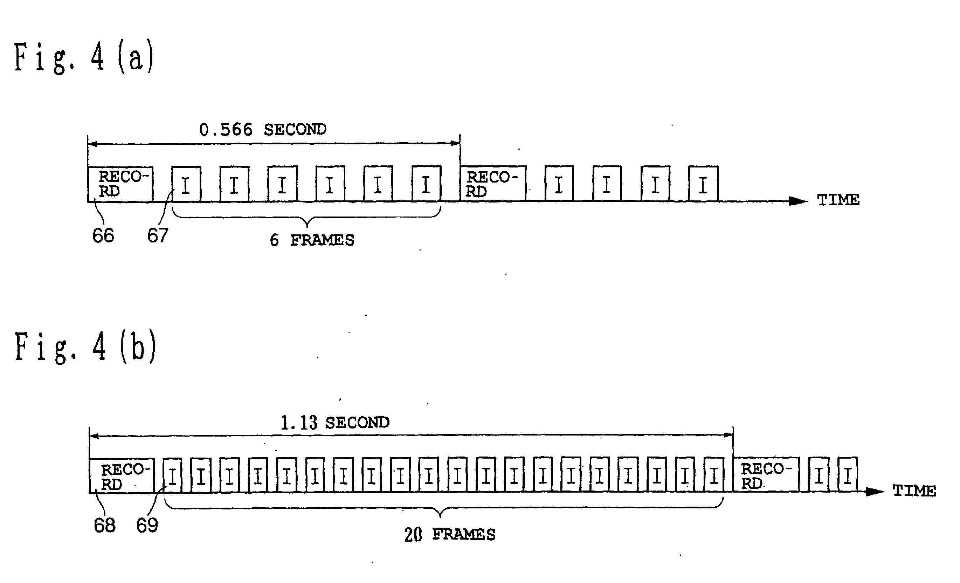

Figure 4 shows time charts when special playback is performed while recording AV data in accordance with the recording and playback method described above. The numeric values shown in Figure 4 were obtained to evaluate the performance of the HDD unit 2 at the design stage of the HDD unit 2. That is, the HDD unit 2, while recording AV data, performs special playback by using the special playback frame rate obtained by reference to the numeric values shown in Figure 4.

Figure 4 (a) is a time chart for the HDD unit 2 when the AV image data to be recorded is high definition television image data, and the AV image data for special playback is also high definition television image data.

In Figure 4(a), the time elapses from left to right in the plane of the figure. Record 66 indicates the time required to record AV data of one disk access unit on the magnetic disk medium of the HDD 10, and I 67 indicates the time required to extract one I frame. The time interval from the beginning of the record 66 to the beginning of the next record is the record/read cycle. Six I frames are extracted in one record/read cycle. Here, the shortest record/read cycle time is 0.566 second.

These numeric values mean the following. That is, the time that AV data of the format shown in Figure 3 is stored in the buffer RAM 20, that is, the time that AV data of one disk access unit is stored in the buffer RAM 20, is 0.566 second at the shortest. Then, when the HDD unit 2 records AV data of one disk access unit and extracts six I frames to be used for special playback during the time interval of 0.566 second, the performance of the HDD unit 2 reaches its limit. This means that the maximum number of I frames that can be extracted during the period of 0.566 second is 6. It is therefore not possible to record AV data of one disk access unit and yet extract seven I frames for special playback during the period of 0.566 second. Furthermore, if the sum of the time required to extract six I frames to be used for special playback and the time required to record AV data of one disk access unit exceeds 0.566 second, there can occur a case where AV data of the next disk access unit is stored in the buffer RAM 20 during that time, giving rise to the possible of the buffer RAM 20 overflowing.

When extracting six I frames for special playback during the period of 0.566 second, the special playback frame rate is 6/0.566 = 10.6 frames/second. By taking its reciprocal, the special playback frame period is 1/10.6 = 0.094 second. If the special playback frame rate is made larger than 10.6 frames/second, in other words, if the special playback frame period is made shorter than 0.094 second, there can occur a case where simultaneous recording and playback cannot be accomplished properly because of overflow of the buffer RAM 20, etc.

Accordingly, when performing special playback of high definition television images recorded on the HDD 10 while performing recording of high definition television images at the same time, if the special playback frame rate is made larger than 10.6 frames/second, in other words, if the special playback frame period is made shorter than 0.094 second, there can occur a case where the simultaneous recording and playback cannot be accomplished properly because of overflow of the buffer RAM 20, etc.

Figure 4(b) is a time chart when the AV image data to be recorded is standard definition television image data, and the AV image data for special playback is also standard definition television image data.

In Figure 4(b), the time elapses from left to right in the plane of the figure. Record 68 indicates the time required to record AV data of one disk access unit on the magnetic disk medium of the HDD 10, and I 69 indicates the time required to extract one I frame. The time interval from the beginning of the record 69 to the beginning of the next record is the record/read cycle. Twenty I frames are extracted in one record/read cycle. Here, the shortest record/read cycle time is 1.13 second.

These numeric values, similarly to Figure 4(a), mean the following. That is, the time that AV data of the format shown in Figure 3 is stored in the buffer RAM 20, that is, the time that AV data of one disk access unit is stored in the buffer RAM 20, is 1.13 second at the shortest. Then, when the HDD unit 2 records AV data of one disk access unit and extracts 20 I frames to be used for special playback during the time interval of 1.13 second, the performance of the HDD unit 2 reaches its limit. This means that the maximum number of I frames that can be extracted during the period of 1.13 second is 20.

When extracting 20 I frames for special playback during the period of 1.13 second, the special playback frame rate is 20/1.13 = 17.7 frames/second. By taking its reciprocal, the special playback frame period is 1/17.7 = 0.0565 second.

Accordingly, when performing special playback of standard definition television images recorded on the HDD 10 while performing recording of standard definition television images at the same time, if the special playback frame rate is made larger than 17.7 frames/second, in other words, if the special playback frame period is made shorter than 0.0565 second, there can occur a case where the simultaneous recording and playback cannot be accomplished properly because of overflow of the buffer RAM 20, etc.

The maximum value of the frame rate (the minimum value of the frame period) for special playback, when the AV image data to be recorded is standard definition television image data, and the AV image data for special playback is high definition television image data, is estimated in the same manner as in Figures 4(a) and 4(b). The maximum value of the frame rate (the minimum value of the frame period) for special playback, when the AV image data to be recorded is high definition television image data, and the AV image data for special playback is standard definition television image data, is also estimated in like manner. Further, the maximum value of the frame rate (the minimum value of the frame period) for special playback when AV data is not being recorded is likewise obtained for the case where the AV image data for special playback is standard definition television image data, and for the case where the AV image data for special playback is high definition television image data, respectively.

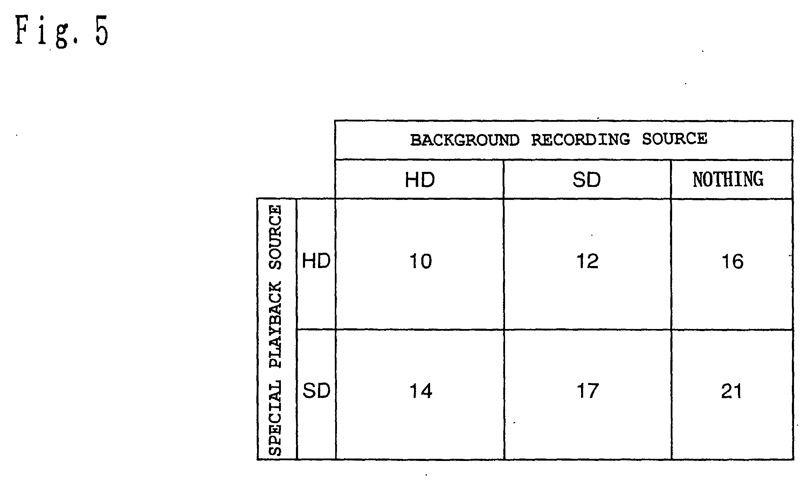

Figure 5 shows the special playback frame rates determined by reference to the evaluation results of Figure 4 and employed when the HDD unit 2 performs simultaneous recording and playback. As shown in Figure 5, the special playback frame rates are set somewhat smaller than the respective maximum special playback frame rates obtained from the above evaluation.

More specifically, when the background recording source, i.e., the AV data to be recorded in the background while special playback is being performed, is high definition television image data, and the special playback source, i.e., the AV data to be played back in special playback mode, is also high definition television image data, the frame rate for the special playback is set to 10 frames/second which is smaller than the maximum value of the special playback frame rate obtained in Figure 4(a). On the other hand, when the background recording source is standard definition television image data, and the special playback source is high definition television image data, the frame rate for the special playback is set to 12 frames/second which is smaller than the maximum value of the corresponding special playback frame rate.

When the background recording source is high definition television image data, and the special playback source is standard definition television image data, the frame rate for the special playback is set to 14 frames/second which is smaller than the maximum value of the corresponding special playback frame rate.

When the background recording source is standard definition television image data, and the special playback source is also standard definition television image data, the frame rate for the special playback is set to 17 frames/second which is smaller than the maximum value of the special playback frame rate obtained in Figure 4(b).

When background recording is not performed, and when the special playback source is high definition television image data, the frame rate for the special playback is set to 16 frames/second which is smaller than the maximum value of the corresponding special playback frame rate.

When background recording is not performed, and when the special playback source is standard definition television image data, the frame rate for the special playback is set to 21 frames/second which is smaller than the maximum value of the corresponding special playback frame rate.

As can be seen, the special playback frame rate is made smaller when special playback is performed simultaneously with recording than when only special playback is performed. When special playback is performed simultaneously with recording, the special playback frame rate is made smaller when the AV data being recorded in the background is high definition television image data whose transfer rate is high, than when it is standard definition television image data. Likewise, the special playback frame rate is made smaller when the AV data for special playback is high definition television image data whose transfer rate is high, than when it is standard definition television image data.

By adjusting the special playback frame rate according to the kind and the presence or absence of AV data being recorded and the kind of AV data to be played back in special playback mode, as described above, the problem that the necessary frame rate cannot be secured due to the limited transfer capability of the HDD unit 2 can be solved, and thus recording or special playback of AV data can always be performed properly.

Next, a description will be given of the operation at the time when the HDD unit 2 performs simultaneous recording and playback, allowing recorded image data to be played back in special playback mode while recording incoming image data at the same time. The following description is given by taking as an example the case where images to be recorded are high definition television images and images to be played back in special playback mode are also high definition television images.

The D-VHS 3 is playing back AV data recorded on a tape medium. It is assumed here that the AV data is recorded as an MPEG2 transport stream. It is also assumed that the MPEG2 transport stream carries high definition television image data.

The D-VHS 3 transfers the playback AV data as isochronous packets onto the IEEE 1394 bus 1.

On the other hand, in Figure 2, receives via the recording/playback port 25 the isochronous packets that the D-VHS 3 transferred onto the IEEE 1394 bus 1, by identifying the isochronous channel number. Furthermore, the IEEE 1394 I/F 7 of the HDD unit 2 converts the received isochronous packets into an MPEG2 transport stream, and transfers to the recording signal processing means 22.

The recording signal processing means 22 appends a time stamp to each transport packet transferred from the IEEE 1394 I/F 7. It also analyzes the MPEG2 transport stream, and creates special playback information indicating the position of each frame, which is used when performing special playback.

The microprocessor 21 identifies the kind of image data carried in the MPEG2 transport stream transferred to the recording signal processing means 22. Since the image data transmitted from the D-VHS 3 is high definition television image data, the image data carried in the received MPEG2 transport stream is identified as high definition television image data. This is done by identifying image resolution after extracting, for example, the parameter information (e.g., horizontal size, vertical size, etc.) described in the corresponding elementary stream contained in the transport stream.

Then, the recording signal processing means 22 transfers the special playback information and the MPEG2 transport stream to the transfer control means 24.

The transfer control means 24 arbitrates data transfers between the recording signal processing means 22, the playback signal processing means 22, and the HDD 10 under the control of the microprocessor 21.

Next, the transfer control means 24 receives the special playback information and the transport packets carried in the MPEG2 transport stream as they are transferred from the recording signal processing means 22, and temporarily stores them in the buffer RAM 20.

When data is stored in the buffer RAM 20 up to 2M bytes, i.e., the size of one disk access unit, the transfer control means 22 transfers the data stored in the buffer RAM 20 to the HDD 10, and issues a write command to the HDD 10 to write the data to the magnetic disk medium, by specifying the recording start LBA and the number of sectors to be written. Here, the number of sectors to be written is specified using the number of sectors forming the disk access unit.

On the other hand, the HDD 10, under instruction from the microprocessor 21, converts the data received from the transfer control means 24 into a recording signal, amplifies it by a prescribed factor, and sends it to the magnetic head.

The HDD 10 controls the actuator and repositions the magnetic head to the next write position on the magnetic disk medium. The magnetic head records the signal on the magnetic disk. When recording on the magnetic disk is completed, the HDD 10 notifies the transfer control means 22 of the completion of the recording; upon receiving the notification, the transfer control means 22 generates a transfer completion interrupt to the microprocessor 21.

The transfer control means 24 sends a transfer request to the microprocessor 21.

In response, the microprocessor 21 specifies the starting LBA and the number of sectors to be written, and instructs the transfer control means 24 to transfer data to the HDD 10.

In this way, the HDD unit 2 records the AV data that the D-VHS 3 played back.

While the above operation is being performed, the HDD unit 2 plays back recorded AV data for special playback and transmits it on the IEEE 1394 bus 1, and the STB 4 presents the image being played back in special playback mode for display on the monitor 6.

More specifically, when a special playback instruction is received, the microprocessor 21 identifies the kind and the presence or absence of image data transferred to the recording signal processing means 22 and the kind of image data to be played back in special playback mode, and determines the special playback frame rate based on their combination as shown in Figure 5. The frame rate thus determined is reported to the playback signal processing means 23.

The frame rate adjusting means 11 adjusts the frame rate so as to match the frame rate determined by the microprocessor 21 as shown in Figure 5.

In accordance with the adjustment made by the frame rate adjusting means 11, the playback signal processing means 23 requests the transfer control means 24 to transfer AV data to be used for special playback.

The transfer control means 24, upon receiving the request from the playback signal processing means 23, sends a transfer request to the microprocessor 21.

In response to the transfer request received from the transfer control means 23, the microprocessor 21 issues a transfer instruction to the transfer control means 24 for transfer of I frames from the HDD 10, by specifying the starting LBA, the number of sectors to be transferred, the number of valid data start offsets, and the byte length of valid data.

The transfer control means 24 issues a read command to the HDD 10 by specifying the starting LBA of the AV data to be read out and the number of sectors to be read out. Here, the number of sectors to be read out is specified using the number of sectors forming the disk access unit.

That is, the transfer control means 24 reads the special playback information created at the time of recording the AV data and, based on the special playback information, determines which portion of the recorded AV data is to be read out.

In this way, the frame rate adjusting means 11 adjusts the frame rate to the value determined as described above and, in accordance with the adjustment thus made, the playback signal processing means 23 requests the transfer control means 24 to transfer data.

More specifically, since the background recording source is high definition television image data, and the special playback source is also high definition television image data, the special playback frame rate is set to 10 frames/second, as shown in Figure 5.

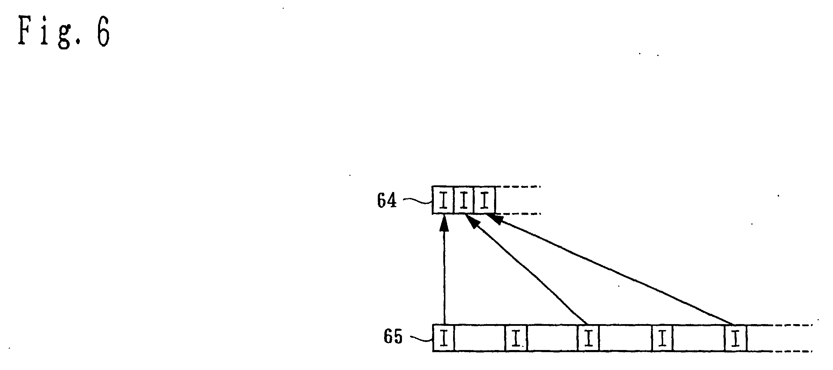

Figure 6 shows special playback data 64 constructed by extracting I frames for special playback from the special playback source 65. In accordance with the frame rate adjusted by the frame rate adjusting means 11, the transfer control means 24 reads I frames in decimating fashion from the special playback source 65 as shown. How a disk access unit containing the I frames to be used for special playback is found by using the special playback information will be described in detail later.

The HDD unit 2, based on the LBA and the number of sectors reported from the transfer control means 24, controls the spindle motor and the actuator and repositions the head to the next read position of AV data on the magnetic disk medium. The head reads the signal recorded on the magnetic disk medium. The signal is then amplified by a prescribed factor, and converted into digital data.

The transfer control means 24 reads out AV data of one disk access unit containing the I frames to be used for special playback, and temporarily stores the data in the buffer RAM 20. If AV data not used for special playback, such as B frames or P frames, are contained in the readout disk access unit, such data is removed from the AV data to be stored in the buffer RAM 20. For example, if the I frame size is not an integral multiple of 512 bytes, the readout data inevitably contains unwanted data because the data is read from the HDD 10 sector by sector (one sector contains 512 bytes). The I frames to be used for special playback are thus extracted and stored in the buffer RAM 20 under the control of the transfer control means 24.

The transfer control means 24 sequentially transfers the AV data stored in the buffer RAM 20 to the playback signal processing means 23 in accordance with the request from the playback signal processing means 23.

When the transfer from the HDD 10 is completed, the transfer control means 24 generates a transfer completion interrupt to the microprocessor 21.

When the transfer completion interrupt is received from the transfer control means 24, the microprocessor 21 judges the current state of processing concurrently proceeding between the recording signal processing means 22 and the playback signal processing means 23, determines the special playback frame rate as shown in Figure 5 in accordance with the kind and the presence or absence of AV data being recorded and the kind of AV data for special playback, and sets the thus determined frame rate in the playback signal processing means 23.

When AV data to be used for special playback becomes necessary, the playback signal processing means 23 requests the transfer control means 24 to transfer I frames in accordance with the adjustment made by the frame rate adjusting means 11.

The frame rate adjusting means 11 adjusts the packet output of the playback signal processing means 23 so as to match the frame rate determined by the microprocessor 21. With this adjustment, the playback signal processing means 23 sends a frame transfer request to the transfer control means 24 for each frame. This means adjusting the number of transfer requests for special playback I frames to be extracted during the input of AV data of one disk access unit. Here, since the AV data to be used for special playback is high definition television image data, the frame rate adjusting means 11 determines the special playback frame rate as shown in Figure, and adjusts the packet output accordingly.

More specifically, since the data being recorded in the background is high definition television image data, and the special playback source is also high definition television image data, the frame rate for the special playback is adjusted to 10 frames/second. As a result, the number of special playback I frames to be extracted during the input of AV data of one disk access unit is adjusted to 6.

The transfer control means 24 arbitrates the data transfer from the recording signal processing means 22, the data transfer to the playback signal processing means 23, and the read/write operations to the HDD 10. As a result of the arbitration, I frames to be used for special playback are transferred to the playback signal processing means 23 in accordance with the request from the playback signal processing means 23. In this way, the transfer control means 24 performs processing for simultaneous recording and playback under the control of the microprocessor 21.

AV data is transferred from the transfer control means 24 to the playback signal processing means 23 in the form of transport packets; here, only transport packets selected from among the recorded AV data are transferred. That is, transport packets containing all or part of the I frames to be used for special playback are transferred. Accordingly, information necessary for the MPEG grammar may be missing, or unwanted information may be contained.

Therefore, the playback signal processing means 23 reorganizes the received transport packets so as to match the MPEG grammar. The reorganized transport packets are then transferred as a special playback MPEG2 transport stream to the IEEE 1394 I/F 7.

The IEEE 1394 I/F 6 transmits the packets as isochronous packets from the recording/playback port 25 onto the IEEE 1394 bus 1 for transfer to the STB 4.

The IEEE 1394 I/F 17 of the STB 4 receives the isochronous packets transferred from the IEEE 1394 I/F 7, by identifying the isochronous channel number. Then, the IEEE 1394 I/F 17 converts the isochronous packets into an MPEG2 transport stream for output to the transport decoder 16.

The transport decoder 16 demultiplexes the MPEG2 transport stream into packetized elementary streams (PESs).

The AV decoder 18 decompresses the compressed PESs and converts them into analog signals for output to the monitor 5.

The monitor 5 displays the AV data on the screen. The special playback is thus accomplished.

Since the special playback frame rate is varied according to the kind of the background recording source and the kind of the special playback source, the HDD unit 2 can properly perform simultaneous recording and playback.

Now, as previously touched on, a description will be given of how the transfer control means 24 can find I frames efficiently.

For this purpose, an additional explanation will be given of the recording format of the disk access unit described with reference to Figure 3.

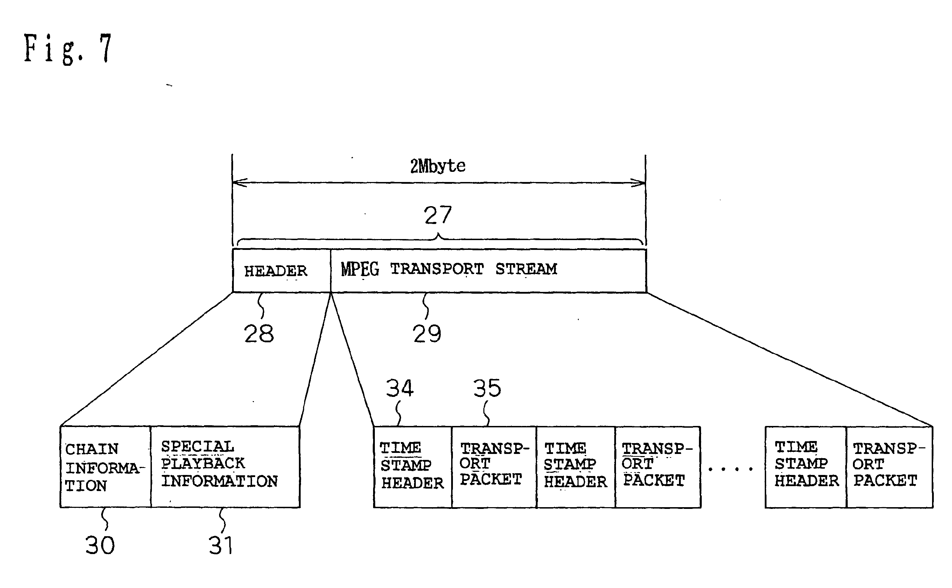

Figures 7 to 10 show the recording format of the disk access unit. AV data is recorded in the recording format shown here.

Figure 7 is a diagram schematically showing the recording format of the present embodiment that is used when the HDD unit 2 records AV data.

The disk access unit 27 is of fixed length, for example, 2M bytes, and is made up of contiguous sectors.

The disk access unit 27 is divided into a header 28 and an MPEG2 transport stream 29.

The header 28 contains chain information 30 and special playback information 31.

The chain information 30 is used to access the preceding and succeeding disk access units 27 and carries LBAs indicating the start positions of the preceding and succeeding disk access units, while the special playback information 31 is used when selecting the frames to be used for special playback.

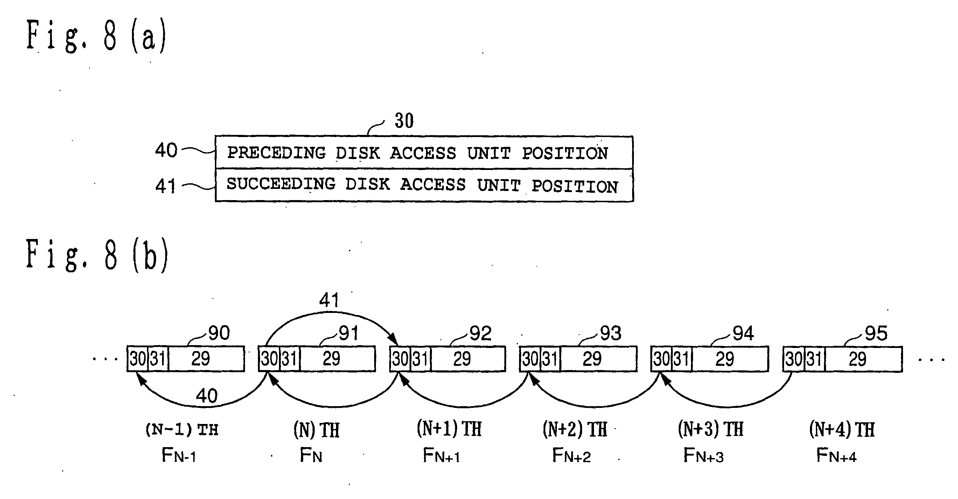

Figure 8(a) shows the details of the chain information 30. Figure 8(b) is a diagram for explaining the chain information 30.

Preceding disk access unit position 40 is information that is used to access the immediately preceding disk access unit and describes the start position of the preceding disk access unit by using an LBA.

Succeeding disk access unit position 41 is information that is used to access the next disk access unit and describes the start position of the next disk access unit by using an LBA.

Figure 8(b) shows how other disk access units can be accessed using the chain information in the N-th disk access unit.

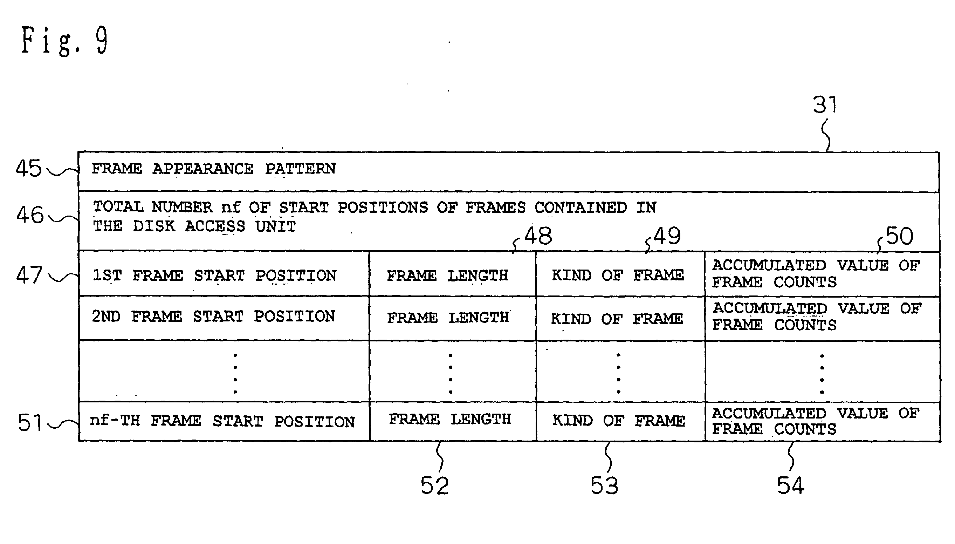

Figure 9 shows the details of the special playback information 31.

Frame appearance pattern 45 is information indicating how the various kinds of frames appear. More specifically, this information indicates the pattern of sequence in which an I frame (Intra-frame), P frames (Predictive-frames), and B frames (Bidirectionally predictive-frames) appear. Such a pattern can be described based on the total number of frames in a GOP (Group of pictures) and the cycle in which an I or a P frame appears, as shown in Figure 10.

For example, when the GOP consists of 15 frames, and an I or a P frame appears every three frames, then the frame appearance pattern 45 is described to indicate that the number of frames in GOP is 15 and the I or P frame appearance cycle is 3. In this example, the I, P, and B frames appear in the sequence shown in Figure 10.

Total number, nf, of start positions of the frames contained in the disk access unit, indicated at 46, is information that indicates the total number of frames whose start positions are contained in the disk access unit.

First frame start position 47 indicates the start position of the first of the frames whose start positions are contained in the disk access unit, the position being expressed in terms of the number of bytes from the beginning of the disk access unit 27. Frame length 48 indicates the data length of the frame in terms of bytes. Kind of frame 49 is information that indicates the kind of the frame, an I frame, a P frame, or a B frame. Accumulated value of frame counts, 50, is information that indicates how many frames precede that frame as counted from the beginning of the AV data.

The information that concerns the frames whose start positions are contained in the disk access unit as described above is described by nf pieces.

In this way, the special playback information 31 describes the results of analysis of the AV data in the form of a table.

Turning back to Figure 7, the MPEG transport stream 29 contains transport packets with a time stamp appended to each of them. That is, the transport stream comprises time stamp headers 34 and transport packets 35.

Since the AV data is recorded using such a recording format, the transfer control means 24 can efficiently extract I frames.

That is, when performing special playback, the transfer control means 24 first reads a header 28 in one disk access unit to obtain the position information of the I frame to be used for special playback, and reads out the I frame data itself from the HDD 10.

The transfer control means 24 then examines the chain information 30 contained in the thus readout header 28 of the disk access unit to find the position of the disk access unit that contains the beginning of the I frame to be extracted next. Then, the transfer control means 24 reads out the header 28 of the disk access unit that contains the I frame to be extracted next.

Next, the frame appearance pattern 45 in the special playback information 41 contained in the header 28 is examined to determine how many frames precede the I frame to be read out next, as counted from the beginning of the AV data contained in that disk access unit.

Suppose here that the frame is found to be the nth frame in that AV data; then, the position information of the frame can be obtained from the description of the start position of the nth frame in the special playback information 31.

The transfer control means 24 reads out the thus found I frame.

In this way, the transfer control means 24 extracts the next I frame.

The I frames to be used for special playback are sequentially extracted by repeating the above process.

As described above, by just reading the header of the disk access unit containing the I frame to be extracted, and reading out the I frame data, the transfer control means 24 can extract the I frame to be used for special playback. Since there is no need to read out one entire disk access unit just to extract one I frame, and since the position in the disk access unit at which the I frame is stored can be easily found, the I frame can be extracted efficiently.

The above example has been described by assuming that the I frame that appears next is used for special playback, but in the case where the I frames are extracted by decimating them, the I frames can be extracted efficiently as in the above example. Here, the frames used for special playback need not be limited to I frames, but I frames and P frames may be used, or I frames, P frames, and B frames may be used.

The present embodiment has been described by taking as an example the case where the HDD unit 2, while recording AV data being transferred from the DVHS 3, plays back recorded AV data in special playback mode for output to the STB 4, but the embodiment is not limited to this particular example. The embodiment is also applicable, for example, to the case where the HDD unit 2, while recording AV data received by the STB 4, plays back recorded AV data in special playback mode for output to the STB 4; that is, the only requirement is that the HDD unit 2, while recording AV data being transferred from an apparatus connected to the IEEE 1394 bus 1, be able to present special playback AV data to an apparatus that can display images and is connected to the IEEE 1394 bus 1.

In the present embodiment, the HDD unit 2 has been described as comprising the IEEE 1394 I/F 7, the stream control means 8, and the HDD 10, but the configuration is not limited to this particular example. Alternatively, the functions of the IEEE 1394 I/F 7 and the stream control means 8 may be implemented using a personal computer, while implementing the function of the HDD 10 by an HDD unit. In that case, the HDD unit may be externally connected by cable to the personal computer or may be built in the personal computer.

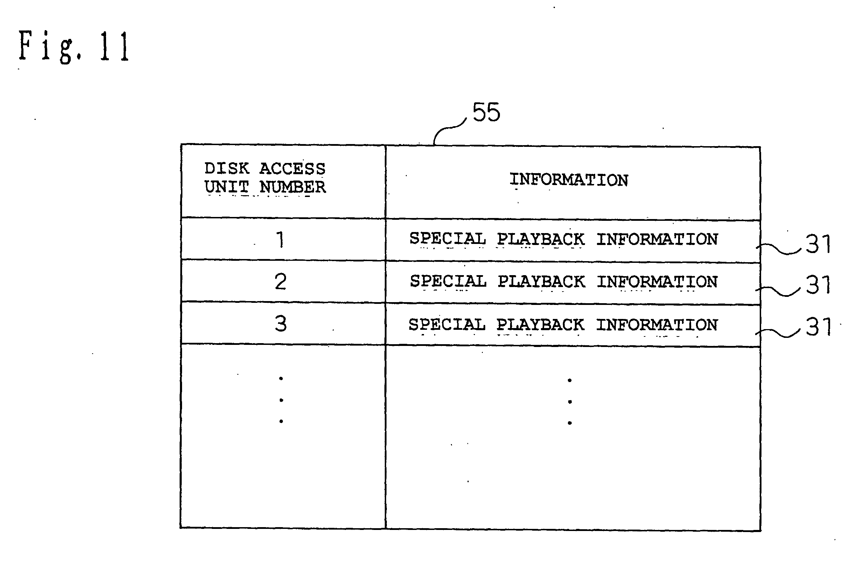

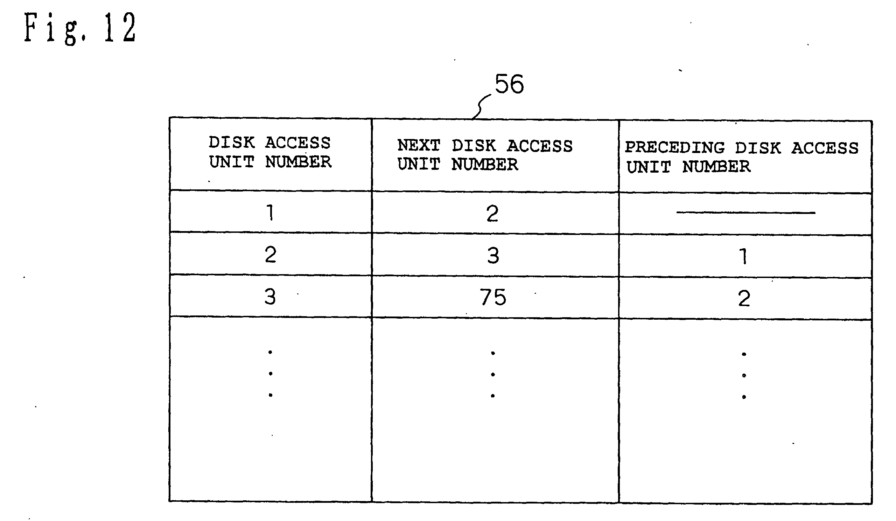

Lastly, another example of the recording format of the present embodiment will be described. Figure 11 shows special playback information 55. Figure 12 shows chain information 56.

The special playback information 55 contains the previously described special playback information 31 for each disk access unit.

The chain information 56 is used to reference the next disk access unit. The example of Figure 12 shows that the second disk access unit follows the first disk access unit and the third disk access unit follows the second disk access unit, and the 75th disk access unit follows the third disk access unit in turn.

The HDD unit 2 stores the special playback information 55 and chain information 56 separately from the disk access units. That is, the special playback information 55 and the chain information 56 are stored on the magnetic disk medium of the HDD 10 and, when the HDD unit 2 performs recording and special or normal playback, the special playback information 55 and the chain information 56 are read from the HDD 10 into the buffer RAM 20; when performing recording, these pieces of information are created or updated, and when performing playback or special playback, these pieces of information are referenced.

If the special playback information 55 and chain information 56 are stored separately from the disk access units as described above, the frames for special playback can be extracted efficiently, as in the case of the recording format of Figure 7.

### (Embodiment 2)

Next, a second embodiment will be described.

This embodiment concerns a special playback system in which when a special playback data stream is transferred from a playback apparatus, the special playback data stream does not exceed the input limit of a terminal apparatus and the terminal apparatus can properly display special playback images.

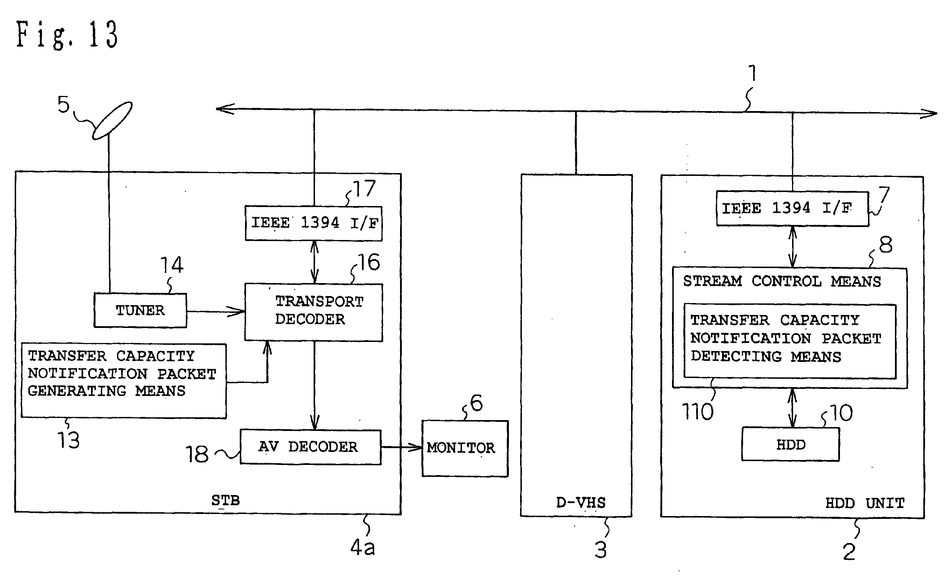

Figure 13 shows the configuration of the special playback system of this embodiment.

The special playback system of this embodiment differs from the first embodiment in that STB 4a is equipped with a transfer capacity notification packet generating means 13.

The transfer capacity notification packet generating means 13 is a means of generating a private packet used to indicate the upper limit value of the transfer rate at which the STB 4a can receive incoming AV data. A transfer capacity notification packet detecting means 110 is a means of detecting the transfer capacity notification packet to acquire the upper limit value.

The STB 4a, the HDD unit 2, and the IEEE 1394 bus 1 in this embodiment together constitute a system as an example of the special playback system of the present invention, the STB 4a in this embodiment is an example of the terminal apparatus of the present invention, the HDD unit 2 in this embodiment is an example of the playback apparatus of the present invention, and the IEEE 1394 bus 1 in this embodiment is an example of the transmission line of the present invention.

Operation of this embodiment will be described below.

In this embodiment also, as in the first embodiment, simultaneous recording and playback operations will be described for playing back recorded AV data in special playback mode while simultaneously recording AV data.

The HDD unit 2 is recording AV data being transferred from the D-VHS 3.

While allowing the recording to continue, the HDD unit 2 plays back recorded AV data at the same time.

On the other hand, the transfer capacity notification packet generating means 13 holds information concerning the upper limit of the transfer rate at which the STB 4a can accept incoming data, and generates a private packet containing this information. Then, a null packet multiplexed in an MPEG2 transport stream is searched for, and is replaced by the private packet. Alternatively, the upper limit value of the transfer rate may be added in an empty field in an already multiplexed private packet.

When the STB 4a is outputting AV data on the IEEE 1394 bus 1, the generated private packet is also multiplexed on the AV data for output on the IEEE 1394 bus 1.

The IEEE 1394 I/F 7 of the HDD unit 2 receives the AV data containing the private packet and transferred over the IEEE 1394 bus 1, and reconstructs the data into an MPEG2 transport stream.

The transfer capacity notification packet detecting means 110 detects the private packet reporting the upper limit value, and thus acquires the upper limit value. The acquired upper limit value is reported to the microprocessor 21, and the frame rate is adjusted by the frame rate adjusting means 11.

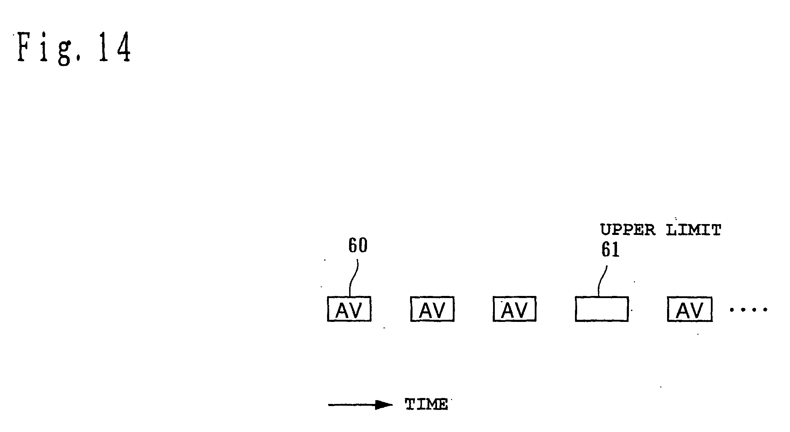

Figure 14 shows an example of the reconstructed MPEG2 transport packets. The transport packet 60 is an AV data transport packet, and the transport packet 61 is the private packet reporting the upper limit value.

Here, the upper limit value is, for example, 60 Mbps for high definition television image data, and 30 Mbps for standard definition television image data. It is also assumed that when playing back AV data at normal speed, the transfer rate is 30 Mbps for high definition television image data, and 15 Mbps for standard definition television image data.

However, when performing special playback, the transfer rate becomes higher than when performing playback at normal speed, because special playback data consisting of I frames are created and transferred. In the case of high definition television image data, special playback may require a transfer rate of 60 Mbps or higher, in which case the STB 4a cannot process the data in time.

In view of this, the frame rate adjusting means 11 adjusts the frame rate so that it does not exceed the upper limit value of the input to the STB 4a reported by the private packet.

The transfer control means 24 extracts I frames of AV data for special playback, at the frame rate determined by the frame rate adjusting means 11.

Since the frame rate at which the HDD 2 performs special playback is adjusted based on the information defining the upper limit of the transfer rate at which the STB 4a can accept incoming data, as described above, the STB 4a can display special playback images properly.

Instead of the upper limit of the transfer rate at which the STB 4a can accept incoming data, the maximum processing bit rate that the STB 4a can decode in unit time maybe included in the transfer capacity notification packet. That is, when the special playback data stream is constructed from I frames alone, since there is no MPEG data compression in the temporal domain, but the data is compressed only in the spatial domain, the processing time that the STB 4a requires to decompress one frame becomes longer compared with the case of normal playback. In other words, the number of frames that can be decompressed per unit time is smaller in the case of special playback than in the case of normal playback. As a result, if the frame rate at which the HDD unit 2 performs special playback is high, the data amount will exceed the amount that the STB 4a can process in unit time, resulting in an inability to display images properly. In view of this, when the HDD unit 2 performs special playback, the frame rate is determined in accordance with the maximum processing bit rate, and is output in order that special playback can be performed properly without exceeding the limit of the amount of data that the STB 4a can decompress in unit time. In this way, the transfer capacity notification packet need only carry information capable of indicating the processing limit of the STB, whether it is information indicating the input limit of the STB or the limit of its decoding capability.

The present embodiment has been described for the case where simultaneous recording and playback is performed, but alternatively, the HDD unit 2 may perform special playback and the data may be input to the STB 4a for display on the monitor 6.

The present embodiment has been described by taking as an example the case where the HDD unit 2, while recording AV data being transferred from the DVHS 3, plays back recorded AV data in special playback mode for output to the STB 4a, but the embodiment is not limited to this particular example. The embodiment is also applicable, for example, to the case where the HDD unit 2, while recording AV data received by the STB 4a, plays back recorded AV data in special playback mode for output to the STB 4a. That is, the only requirement is that the HDD unit 2, while recording AV data being transferred from an apparatus connected to the IEEE 1394 bus 1, be able to present special playback AV data to the STB 4a.

In the present embodiment, the HDD unit 2 has been described as comprising the IEEE 1394 I/F 7, the stream control means 8, and the HDD 10, but the configuration is not limited to this particular example. Alternatively, the functions of the IEEE 1394 I/F 7 and the stream control means 8 may be implemented using a personal computer, while implementing the function of the HDD 10 by an HDD unit. In that case, the HDD unit may be externally connected by cable to the personal computer or may be built in the personal computer.

Further, the terminal apparatus of the present invention is not limited to the STB of the above embodiment, but any other apparatus, such as a television receiver, may be used as long as the apparatus can display AV data on the monitor.

### (Embodiment 3)

Next, a third embodiment will be described.

In this embodiment also, as in the second embodiment, a description will be given of a special playback system in which when a special playback data stream is transferred from a playback apparatus, the special playback data stream does not exceed the input limit of a terminal apparatus and the terminal apparatus can properly display special playback images.

This embodiment will be described focusing on the major difference from the second embodiment.

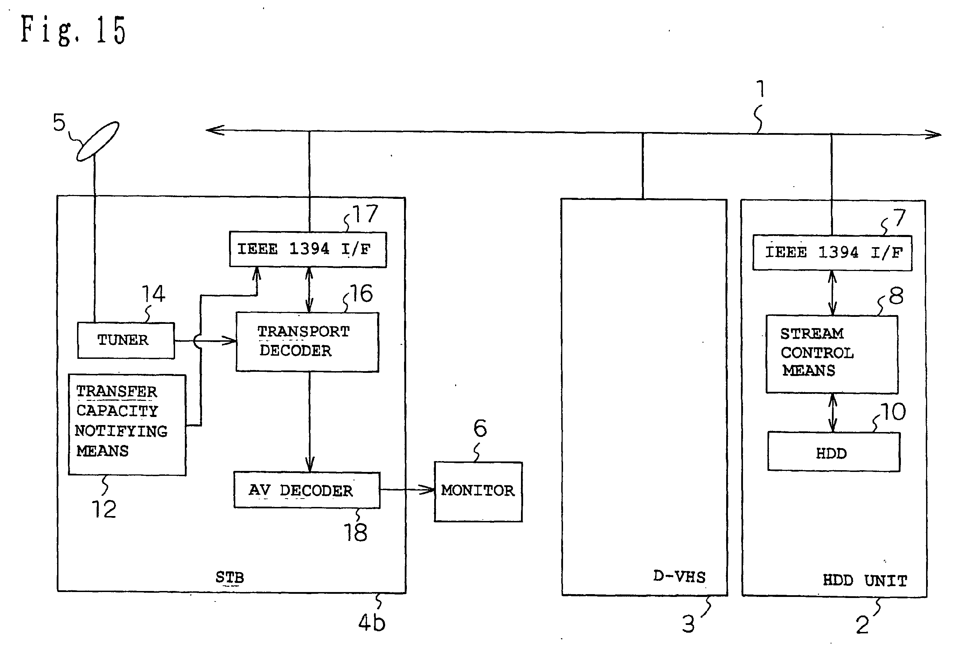

Figure 15 shows the configuration of the special playback system of this embodiment.

The difference between this embodiment and the second embodiment is that a transfer capacity notifying means 12 is provided in place of the transfer capacity notification packet generating means 11.

The transfer capacity notifying means 12 is a means of generating a command for reporting the upper limit value of the transfer rate at which the STB 4b can accept incoming data.

The STB 4b in this embodiment is an example of the terminal apparatus of the present invention.

Operation of this embodiment will be described below.

The transfer capacity notifying means 12 generates a command for reporting the upper limit value of the transfer rate at which the STB 4b can accept incoming data.

The IEEE 1394 I/F 17 transfers this command as an asynchronous packet to the IEEE 1394 I/F 7 of the HDD unit 2.

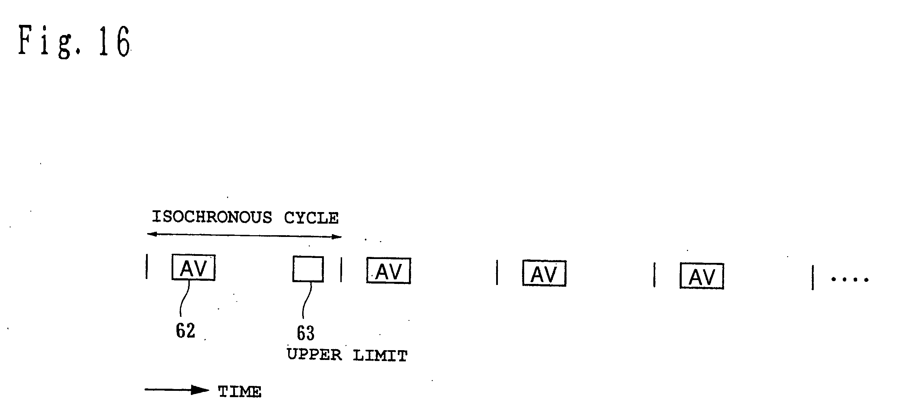

Figure 16 shows an example of the packet transferred on the IEEE 1394 bus 1. It is shown that AV data is transferred as an isochronous packet 62 while the upper limit notifying command is transferred as an asynchronous packet 63.

The IEEE 1394 I/F 17 reports the upper limit to the microprocessor 21, and the microprocessor sets the frame rate in the frame rate adjusting means 11.

The frame rate adjusting means 11 adjusts the frame rate of special playback data in the same manner as in the second embodiment.

Otherwise, the configuration is the same as that of the second embodiment.

Instead of the upper limit value of the transfer rate at which the STB 4b can accept incoming data, the transfer capacity notifying means 12 may send out information indicating the maximum processing bit rate that the STB 4b can decode in unit time, as in the case of the second embodiment. This makes it possible to perform special playback properly without exceeding the limit of the amount of data that the STB 4b can decode in unit time. In this way, the transfer capacity notifying means need only transmit information capable of indicating the processing limit of the STB, whether it is information indicating the input limit of the STB or the limit of its decoding capability.

The present embodiment has been described as scheduling the record and playback operations to be done on the HDD 10 at the timing that AV data of one disk access unit such as shown in Figure 3 is stored in the buffer RAM 20 or output from it, but alternatively, the record and playback operations may be scheduled to be done on the HDD 10 once in every period T as described in the section of the prior art.

Further, the present embodiment has been described as using only I frames for special playback, but alternatively, I frames and P frames may be used, or I frames, P frames, and B frames may be used.

A medium that holds thereon a program and/or data for causing a computer to implement all or part of the functions of all or part of the means of the recording apparatus of the invention, and that is processable by a computer, also falls within the scope of the present invention.

It will also be noted that an information set consisting of a program and/or data for causing a computer to implement all or part of the functions of all or part of the means of the recording apparatus of the invention also falls within the scope of the present invention.

Further, a medium that holds thereon a program and/or data for causing a computer to implement all or part of the functions of all or part of the playback apparatus, transmission line, and terminal apparatus in the special playback system of the invention, and that is processable by a computer, also falls within the scope of the present invention.

It will also be noted that an information set consisting of a program and/or data for causing a computer to implement all or part of the functions of all or part of the playback apparatus, transmission line, and terminal apparatus in the special playback system of the invention also falls within the scope of the present invention.

The term "data" used in the present invention includes data structure, data format, and data type. The term "medium" used in the present invention includes a recording medium such as a ROM, a transmission medium such as the Internet, or a transmission medium such as light, electric waves, sound waves, etc. The term "medium holding thereon" used in the present invention includes, for example, a recording medium having a program and/or data recorded thereon, or a transmission medium or the like for transmitting a program and/or data. The term "to be processed by computers" used in the present invention means that in the case of a recording medium such as a ROM, for example, the medium is readable by a computer, and in the case of a transmission medium, the program and/or data to be transmitted can be processed by a computer as the result of the transmission.

Further, a program recording medium having a program and/or data recorded thereon for causing a computer to implement all or part of the functions of all or part of the means of the HDD unit of any one of the above embodiments or of the system including the HDD unit, may be implemented as a program recording medium that is readable by a computer, wherein the thus read program and/or data are used to carry out the functions in collaboration with the computer.

The information set of the present invention includes, for example, software such as a program and/or data.

### POTENTIAL FOR EXPLOITATION IN INDUSTRY

As is apparent from the above description, the present invention can provide a recording apparatus capable of accomplishing recording of AV data and special playback of AV data simultaneously and properly when performing special playback of AV data while allowing the recording of AV data to continue, and a program recording medium for use with the same.

The invention can also provide a special playback system in which when a special playback data stream is transferred from a playback apparatus, the special playback data stream does not exceed the input limit of a terminal apparatus and the terminal apparatus displays special playback images properly, and a program recording medium for use with the same.

## Claims

1. A recording apparatus equipped with a recording and playback means capable of performing simultaneous recording and playback, allowing recorded image data to be played back in special playback mode while simultaneously recording incoming image data, wherein
said incoming image data is at least two or more kinds of data having different transfer rates, and
when said recording and playback means performs said simultaneous recording and playback, the frame rate of said image data to be played back in special playback mode is changed according to the mode of said two or more kinds of incoming image data.

2. A recording and playback apparatus as set forth in claim 1, wherein when performing said simultaneous recording and playback, said incoming image data has at least two or more kinds of transfer rates, and the frame rate of said image data to be played back in special playback mode is smaller when said incoming image data is one that has the higher of the transfer rates.

3. A recording and playback apparatus as set forth in claim 1 or 2, wherein when performing said simultaneous recording and playback, said image data to be played back in special playback mode has at least two or more kinds of transfer rates, and the frame rate is smaller when said image data to be played back in special playback mode is one that has the higher of the transfer rates.

4. A recording apparatus as set forth in any one of claims 1 to 3, wherein said frame rate is the number of frames to be read out in a prescribed time.

5. A recording apparatus as set forth in any one of claims 1 to 4, wherein
said recorded image data conforms to an MPEG format, and
said image data to be played back in special playback mode is constructed from all or part of frames constituting said recorded image data.

6. A recording apparatus as set forth in any one of claims 1 to 5, wherein said incoming image data is high definition television image data or standard definition television image data.

7. A special playback system comprising:
a playback apparatus capable of playing back data in special playback mode;
a transmission line for transmitting there along said played back data; and
a terminal apparatus for receiving data transmitted along said transmission line, and wherein:
said terminal apparatus notifies said playback apparatus of an upper limit of the signal processing capability of said terminal apparatus, and
said playback apparatus outputs special playback data so as not to exceed said processing capability.

8. A special playback system as set forth in claim 7, wherein
said special playback data conforms to an MPEG format, and
said special playback is performed by playing back all or part of frames constituting said special playback data.

9. A medium holding thereon a program and/or data for causing a computer to implement all or part of the functions of all or part of the means of the recording apparatus described in any one of claims 1 to 6, wherein said medium is to be processed by computers.

10. An information set consisting of a program and/or data for causing a computer to implement all or part of the functions of all or part of the means of the recording apparatus described in any one of claims 1 to 6.

11. A medium holding thereon a program and/or data for causing a computer to implement all or part of the functions of all or part of the playback apparatus, the transmission line, and the terminal apparatus in the special playback system described in claim 7 or 8, wherein said medium is to be processed by computers.

12. An information set consisting of a program and/or data for causing a computer to implement all or part of the functions of all or part of the playback apparatus, the transmission line, and the terminal apparatus in the special playback system described in claim 7 or 8.
